# EUROPEAN PATENT APPLICATION

(11) **EP 4 694 163 A1**
(43) Date of publication of application: **11.02.2026**
(21) Application number: 25194235.5
(22) Date of filing: 06.08.2025
(51) Int. Cl.: H04N 23/62, H04N 23/63

(54) **ELECTRONIC DEVICE, CONTROL METHOD, COMPUTER PROGRAM, AND COMPUTER READABLE MEDIUM**

(30) Priority: 07.08.2024 JP 2024130835
(71) Applicant: Canon Kabushiki Kaisha, Tokyo, 146-8501 (JP)
(72) Inventor: INAZAWA, Keisuke, Tokyo, 146-8501 (JP)
(74) Representative: TBK

(57) **Abstract**

An electronic device according to the present disclosure includes a control means configured to perform control to display a first operation member capable of receiving a first operation of adjusting a focal position of an imaging means and a second operation member capable of receiving a second operation of finely adjusting the focal position, wherein the control means performs control to emphasize the second operation member if the focal position falls within a predetermined range including a target position that is a focusing position or a registered position during reception of the first operation.

## Description

### TECHNICAL FIELD

The present disclosure relates to an electronic device, and particularly to control of a focal position of an imaging unit.

### BACKGROUND

Application software is wirelessly connected to a camera and can remotely control the camera. The application software operates on a remote terminal such as a smartphone, a tablet device, or a personal computer, and is useful when a user wants to remotely control the camera.

Further, in such application software, a main operation member and an operation member for fine adjustment may be displayed as operation members for focus adjustment for adjusting the focal position of the camera. In this case, the user can easily adjust the focal position to a desired position by using the operation member for fine adjustment in a scene where the user wants to finely adjust the focal position.

Japanese Patent Laid-Open No. 2023-019696 discloses technology for increasing operation sensitivity of an operation member by changing a limited range so that a command value for driving control of an optical member is included in the limited range when the command value is not included in the limited range.

### SUMMARY

However, in the related art, even if the user wants to finely adjust the focal position during the operation of the main operation member, the user may not notice the operation member for fine adjustment (it is sufficient to use the operation member for fine adjustment). If the user does not notice the operation member for fine adjustment, the operation member for fine adjustment is not used, and the user cannot easily adjust the focal position to a desired position. Even if the technology disclosed in Japanese Patent Laid-Open No. 2023-019696 is used, this problem cannot be solved.

The present disclosure provides technology for making it easy for a user to notice an operation member for fine adjustment in a scene where the user wants to finely adjust a focal position while operating a main operation member.

The present disclosure in its first aspect provides an electronic device as specified in claim 1. Optional features are specified in claim 2 to 12. The present disclosure in its second aspect provides a control method as specified in claim 13. The present disclosure in its third aspect provides a computer program as specified in claim 14. The present disclosure in its third aspect provides a computer readable medium as specified in claim 15.

According to the present disclosure, a user can easily notice an operation member for fine adjustment in a scene where the user wants to finely adjust a focal position while operating a main operation member.

### Other Embodiments

Features of the present disclosure will become apparent from the following description of embodiments with reference to the attached drawings. The following description of embodiments is described by way of example.

### BRIEF DESCRIPTION OF THE DRAWINGS

FIG. 1 is a schematic diagram illustrating a configuration example of a system.
FIG. 2A is a block diagram illustrating a configuration example of a camera.
FIG. 2B is a block diagram illustrating a configuration example of a smartphone.
FIGS. 3A to 4B are schematic diagrams illustrating a screen example of a camera control application.
FIG. 5 is a flowchart illustrating an operation example of the smartphone.

### DESCRIPTION OF THE EMBODIMENTS

### Hereinafter, embodiments of the present disclosure will be described. System Configuration

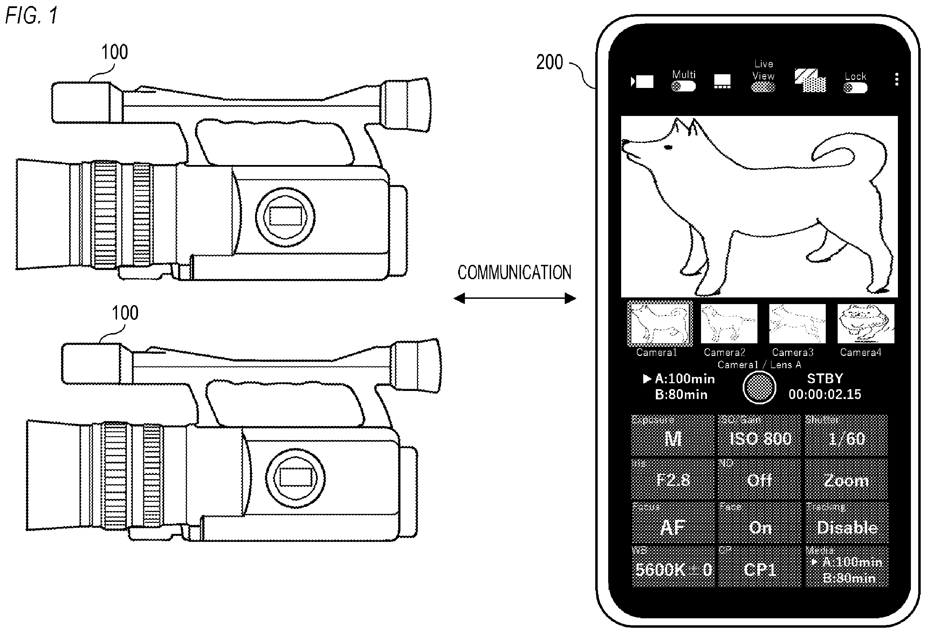

FIG. 1 is a schematic diagram illustrating a configuration example of a system according to the present embodiment. In the system of FIG. 1, a plurality of cameras 100 and a smartphone 200 are communicably connected to each other. FIG. 1 illustrates two cameras 100 but the number of the cameras 100 is not particularly limited, and one camera 100 may be connected to the smartphone 200 or three or more cameras 100 may be connected to the smartphone 200. A communication system (standard) is also not particularly limited and may be, for example, Wi-Fi (registered trademark), Bluetooth (registered trademark), or a wireless communication system exclusive to a manufacturer. The communication between the cameras 100 and the smartphone 200 may be wireless communication or wired communication. A communication system in the wired communication is also not particularly limited and may be, for example, RS-232C, RS-422A, USB, or Ethernet (registered trademark). Any communication system capable of transmitting and receiving a video and transmitting and receiving a setting value of a camera is applicable.

### Configuration of Camera

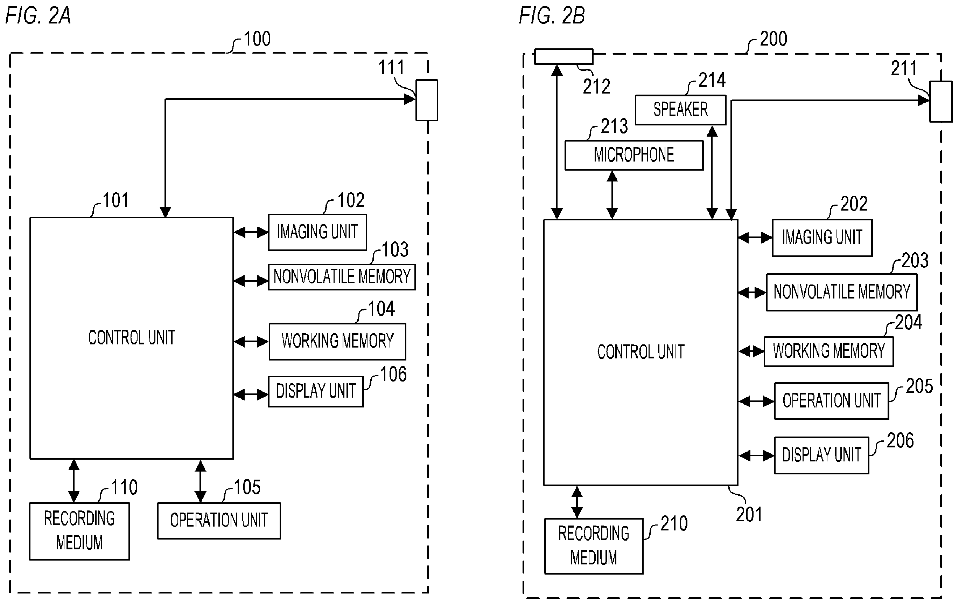

FIG. 2A is a block diagram illustrating a configuration example of the camera 100 (video camera) as an example of a data processing device according to the present embodiment. The data processing device is not limited to the camera 100. For example, the data processing device may be an electronic device such as a tablet device or a personal computer.

A control unit 101 controls each unit in the camera 100 according to an input signal or a program described below. Instead of causing the control unit 101 to control the entire camera 100, the processing may be shared by a plurality of hardware to control the entire camera 100.

An imaging unit 102 converts object light focused by a lens in the imaging unit 102 into an electrical signal, executes noise reduction processing or the like, and outputs image data that is digital data. The captured image data is accumulated in a buffer memory, is subjected to predetermined processing by the control unit 101, and is recorded in a recording medium 110.

A nonvolatile memory 103 is a nonvolatile memory that is electrically erasable and recordable, and stores a program described below to be executed by the control unit 101 or the like.

A working memory 104 is used as the buffer memory that temporarily stores the image data captured by the imaging unit 102, an image display memory of a display unit 106, a work area of the control unit 101, or the like.

An operation unit 105 is used for receiving an instruction for the camera 100 from a user. The operation unit 105 includes, for example, operation members operated by the user, such as a power button for instructing ON/OFF of a power supply of the camera 100, a release switch for instructing shooting, or a reproduction button for instructing reproduction of image data. The operation unit 105 also includes a touch panel formed in the display unit 106. The release switch includes a switch SW1 and a switch SW2. The release switch enters a so-called half-pressed state such that the switch SW1 is turned ON. As a result, an instruction for executing shooting preparations operation such as autofocus (AF) processing, autoexposure (AE) processing, auto white balance (AWB) processing, and electronic flash (EF) pre-flash processing is received. The release switch enters a so-called full-pressed state such that the switch SW2 is switched ON. As a result, the instruction for executing shooting is received.

The display unit 106 displays a live view image (LV image) as a captured image showing an object substantially in real time, a shoot (recorded) captured image, text for interactive operation, and the like. The display unit 106 is not necessarily mounted on the camera 100. The camera 100 can be connected to the internal or external display unit 106 as long as the camera 100 has at least a display control function of controlling display of the display unit 106.

The recording medium 110 can store image data output from the imaging unit 102. The recording medium 110 may be attachable and detachable with respect to the camera 100 or may be mounted on the camera 100. The camera 100 only needs to have a function of accessing at least the recording medium 110.

A connection unit 111 is an interface for connection to an external device. The camera 100 can exchange data with the external device via the connection unit 111. The connection unit 111 includes, for example, an interface for communication with the external device via a wireless LAN. The control unit 101 implements wireless communication with the external device by controlling the connection unit 111.

The camera 100 can operate as a slave device in an infrastructure mode of wireless LAN communication. During operation as the slave device, the camera 100 can be connected to a peripheral access point (hereinafter, AP) to participate in a network formed by the AP. The camera 100 is one type of the AP and can also operate as a simplified AP (hereinafter, simple AP) having a limited function. The AP is an example of a relay device. When the camera 100 operates as the simple AP, the camera 100 itself forms a network. A peripheral device of the camera 100 can recognize the camera 100 as the AP and participate in the network formed by the camera 100. A program for allowing the camera 100 to operate as described above is stored in the nonvolatile memory 103. The camera 100 is one type of the AP, and is a simple AP not having a gateway function of transferring data received from the slave device to an Internet service provider or the like. Accordingly, even when the camera 100 receives data from another device participating in the network formed by the camera 100 itself, the camera 100 cannot transfer the received data to a network such as the Internet.

As described above, a communication system with the external device is not particularly limited. The connection unit 111 may be an interface for executing wired communication by a system such as RS-232C, RS-422A, USB, or Ethernet (registered trademark).

### Configuration of Smartphone

FIG. 2B is a block diagram illustrating a configuration example of the smartphone 200 as an example of a control device according to the present embodiment. The control device is not limited to the smartphone 200. For example, the control device may be an electronic device such as a digital camera, a mobile media player, a tablet device, a personal computer, or a mobile phone.

A control unit 201 controls each unit in the smartphone 200 according to an input signal or a program described below. Instead of causing the control unit 201 to control the entire smartphone 200, the processing may be shared by a plurality of hardware to control the entire smartphone 200.

An imaging unit 202 converts object light focused by a lens in the imaging unit 202 into an electrical signal, executes noise reduction processing or the like, and outputs digital data as image data. The captured image data is accumulated in a buffer memory, is subjected to predetermined processing by the control unit 201, and is recorded in a recording medium 210.

A nonvolatile memory 203 is a nonvolatile memory that is electrically erasable and recordable, and stores an operating system (OS) that is basic software to be executed by the control unit 201, various programs, and the like. A program for communication with the camera 100 is also stored in the nonvolatile memory 203, and is installed as a camera control application. The processing of the smartphone 200 is implemented by reading a program of the camera control application. The camera control application has a function for using basic functions (for example, a function of a wireless LAN, a function of Bluetooth, and a function of calling another application) of the OS installed in the smartphone 200. The camera control application has a remote shooting function of remotely operating and causing the camera 100 to shoot from the smartphone 200 while viewing the LV image obtained from the camera 100 by the smartphone 200. The camera control application has a remote reading function of remotely reading image data stored in a recording medium mounted on the camera 100 or receiving the image data. The OS of the smartphone 200 may have the functions of the present embodiment (for example, the function of the camera control application).

A working memory 204 is used as the buffer memory that temporarily stores the image data captured by the imaging unit 202, an image display memory of a display unit 206, a work area of the control unit 201, or the like.

An operation unit 205 is used for receiving an instruction for the smartphone 200 from the user. The operation unit 205 includes, for example, operation members operated by the user, such as a power button for instructing ON/OFF of a power supply of the smartphone 200 or a touch panel formed in the display unit 206.

The display unit 206 displays an image, text for interactive operation, or the like. The display unit 206 is not necessarily mounted on the smartphone 200. The smartphone 200 can be connected to the internal or external display unit 206 as long as the smartphone 200 has at least a display control function of controlling display of the display unit 206.

The recording medium 210 can store image data output from the imaging unit 202, image data received from the camera 100, or the like. The recording medium 210 may be attachable and detachable with respect to the smartphone 200 or may be mounted on the smartphone 200. The smartphone 200 only needs to have a function of accessing at least the recording medium 210.

A connection unit 211 is an interface for connection to an external device. The smartphone 200 can exchange data with the external device via the connection unit 211. The connection unit 211 includes, for example, an interface for communication with the external device via a wireless LAN. The control unit 201 implements wireless communication with the external device by controlling the connection unit 211.

The smartphone 200 can operate as a slave device in an infrastructure mode of wireless LAN communication and can participate in a network formed by a peripheral AP. The camera 100 may operate as a simple AP such that the smartphone 200 participates in the network formed by the camera 100.

A public network connection unit 212 is an interface used for public wireless communication. The smartphone 200 is connected to another device via the public network connection unit 212 and can execute data communication with the other device or make a call with a user of the other device. During the call, the control unit 201 acquires a voice signal via a microphone 213 or outputs a voice signal via a speaker 214. The public network connection unit 212 includes, for example, an interface for executing communication using 3G, 4G, or 5G. The communication system is not particularly limited and may be, for example, LTE, WiMAX, ADSL, or FTTH. The connection unit 211 and the public network connection unit 212 do not need to be configured as independent hardware, and for example, one antenna may function as both of the connection unit 211 and the public network connection unit 212.

In the following description, there are cases where the smartphone 200 is the subject of the processing. Actually, however, the control unit 201 implements various types of processing by reading and executing the program stored in the nonvolatile memory 203. Likewise, the camera 100 may be described as the subject of the processing, but in practice, the control unit 101 implements various types of processing by reading and executing the programs stored in the nonvolatile memory 103.

### Screen Example of Smartphone

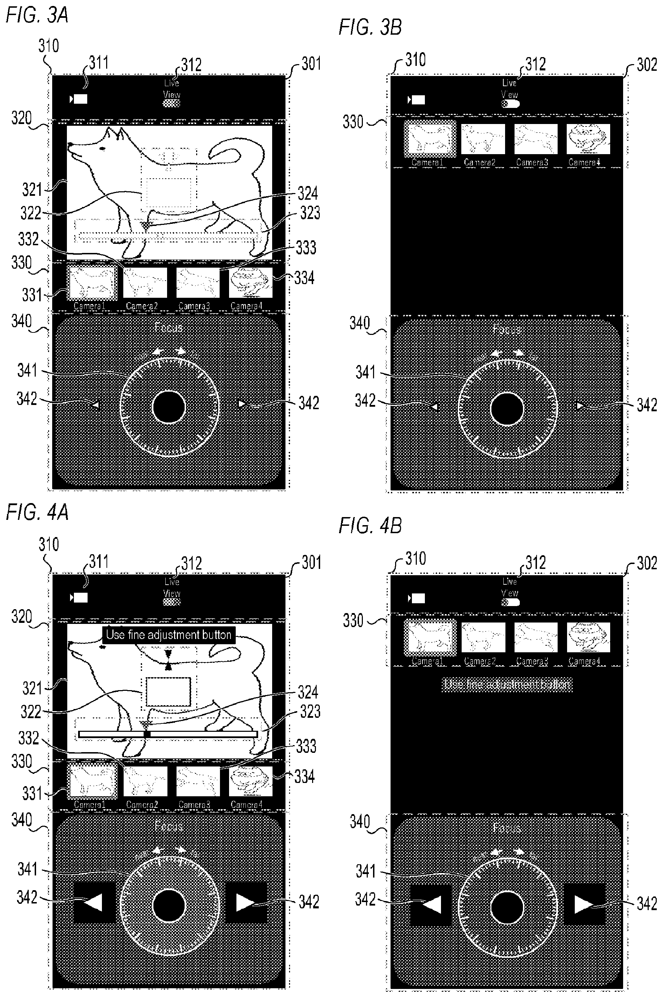

FIGS. 3A to 4B are schematic diagrams illustrating a screen example of the camera control application displayed on the display unit 206 by the smartphone 200. The camera control application is connected to a plurality of cameras simultaneously and can operate each of the cameras. The camera control application receives an LV image or various types of data of the camera via communication with the camera, and displays the LV image or the data on the display unit 206. The display unit 206 is a display unit capable of receiving a touch operation, such as a display unit on which a touch panel is formed.

FIG. 3A illustrates an example of an LV display screen. In FIG. 3A, the control unit 201 is connected to the camera by the camera control application, receives the LV image and various current setting values of the camera from the camera, and displays the LV image and the setting values on an LV display screen 301.

The control unit 201 displays a header portion 310 for changing various settings in an upper portion of the LV display screen 301. For example, the control unit 201 displays a camera connection setting button 311 and an LV display switch 312 in the header portion 310.

The camera connection setting button 311 is a setting button for connection or disconnection with the camera. When the user touches the camera connection setting button 311, the control unit 201 causes a display screen (screen to be displayed) to transition to a setting screen for connection or disconnection with the camera.

The LV display switch 312 is a selector switch for switching to enable/disable an LV display. When the user touches the LV display switch 312, the control unit 201 switches to enable/disable the LV display. In FIG. 3A, the LV display switch 312 is enabled. The enabled state of the LV display switch 312 is a state in which the LV display is enabled, and the disabled state of the LV display switch 312 is a state in which the LV display is disabled.

The control unit 201 also displays an LV area 320 and a sub-LV area 330 on the LV display screen 301. The control unit 201 displays an LV image (main image) acquired from the camera to be operated in the LV area 320. In FIG. 3A, an LV image 321 that is a main image is displayed in the LV area 320. The control unit 201 displays a focus guide 322 and a focus position guide 323 to be superimposed on the LV image 321. The focus guide 322 is displayed at a focus adjustment object position (object area) for adjusting a focal position, and is an item indicating a positional relationship (focusing degree) between a focusing position (target position), which is a focal position at which focusing is performed at the object position, and a current focal position. The focus position guide 323 is an item that indicates a registered position 324 (target position), which is a focal position registered by the user or automatically, and a current focal position 325 and indicates a positional relationship thereof. The focal position described here is a focal position of the camera to be operated.

The control unit 201 displays all of the LV images acquired from the connected cameras in the sub-LV area 330. In FIG. 3A, four cameras (Cameras 1 to 4) are connected to the control unit 201, and four LV images 331 to 334 acquired from the four cameras, respectively, are aligned and displayed in the sub-LV area 330. When the user touches any of the LV images 331 to 334, the control unit 201 selects the touched LV image as a main image, and selects a camera corresponding to the touched LV image as the camera to be operated. In FIG. 3A, the LV image 331 (Camera 1) is selected. The control unit 201 displays a cursor surrounding the LV image 331 as a cursor indicating that the LV image 331 is selected. The control unit 201 displays the LV image 321 in the same manner as the LV image 331 in the LV area 320.

The control unit 201 also displays an operation area 340 on the LV display screen 301. The control unit 201 displays a wheel 341 and a fine adjustment button 342 in the operation area 340. The wheel 341 is an operation member for adjusting the focal position of the camera to be operated, and can receive a slide operation (Touch-Move) of touching the wheel 341 to move the touch position so as to rotate the wheel 341 to the right or the left. In the present embodiment, the control unit 201 moves the focal position to the far side according to the slide operation of rotating the wheel 341 to the right, and moves the focal position to the near side according to the slide operation of rotating the wheel 341 to the left. In addition, the control unit 201 moves the focal position at a speed corresponding to the moving speed of the touch position in the side operation such that the focal position moves at a faster speed as the rotation speed of the wheel is faster. Instead of the wheel 341, another operation member such as a slider bar that can receive a horizontal or vertical slide operation may be displayed.

The fine adjustment button 342 is an operation member for adjusting the focal position of the camera to be operated, and can receive an operation of touching the fine adjustment button 342. The control unit 201 moves the focal position at a predetermined speed (for example, a minimum speed) for a predetermined time or by a predetermined amount in response to one touch (a tap operation of touching and releasing within a predetermined time) on the fine adjustment button 342. In addition, when a long touch operation of touching the fine adjustment button 342 for a predetermined time or more is performed, the control unit 201 continuously moves the focal position at a predetermined speed while the touch is continued. In the present embodiment, there are two left and right fine adjustment buttons 342, and the control unit 201 moves the focal position to the far side according to a touch operation on the right fine adjustment button 342, and moves the focal position to the near side according to a touch operation on the left fine adjustment button 342. Instead of the two fine adjustment buttons 342, another operation member such as one operation member in which the two fine adjustment buttons are integrated may be displayed.

FIG. 3B illustrates an example of an LV non-display screen. For example, when the user touches the LV display switch 312 while the LV display screen 301 in FIG. 3A is displayed, the control unit 201 causes the display screen to transition from the LV display screen 301 in FIG. 3A to the LV non-display screen 302 in FIG. 3B. The LV non-display screen 302 is a screen in which the LV area 320 is not displayed. As the LV area 320 is not displayed, the LV image 321, the focus guide 322, and the focus position guide 323 are also not displayed. In FIG. 3B, the LV display switch 312 is disabled.

In the present embodiment, the control unit 201 emphasizes the fine adjustment button 342 when the focal position falls within a predetermined range including a target position that is a focusing position or a registered position during the reception of the touch operation on the wheel 341. The predetermined range is, for example, a range centered on the target position. The predetermined range may be a range centered on a position deviated from the target position.

FIG. 4A illustrates an example of an LV display screen in which the fine adjustment button 342 is emphasized. The control unit 201 emphasizes the fine adjustment button 342 by changing the size and color of the fine adjustment button 342 from the normal size and color illustrated in FIG. 3A. In the present embodiment, the control unit 201 also emphasizes the focus guide 322 and the focus position guide 323 by changing the colors of the focus guide 322 and the focus position guide 323 from the normal colors. The color of the emphasized fine adjustment button 342, the color of the emphasized focus guide 322, and the color of the emphasized focus position guide 323 are the same. Furthermore, in the present embodiment, the control unit 201 displays an item indicating the fine adjustment button 342. In FIG. 4A, a message 401 prompting use of the fine adjustment button 342 is displayed as the item indicating the fine adjustment button 342.

Note that, in FIG. 4A, since the focal position is near the focusing position and near the registered position, the focus guide 322 and the focus position guide 323 are emphasized. When the focal position is near the focusing position but not near the registered position, the focus position guide 323 is not emphasized, and the focus guide 322 is emphasized. When the focal position is near the registered position but not near the focusing position, the focus guide 322 is not emphasized, and the focus position guide 323 is emphasized.

FIG. 4B illustrates an example of an LV non-display screen on which the fine adjustment button 342 is emphasized. Similarly to FIG. 4B, the control unit 201 emphasizes the fine adjustment button 342 by changing the size and color of the fine adjustment button 342 from the normal size and color illustrated in FIG. 3A. Similarly to FIG. 4A, the control unit 201 displays the message 401 indicating the fine adjustment button 342.

### Operation of Smartphone

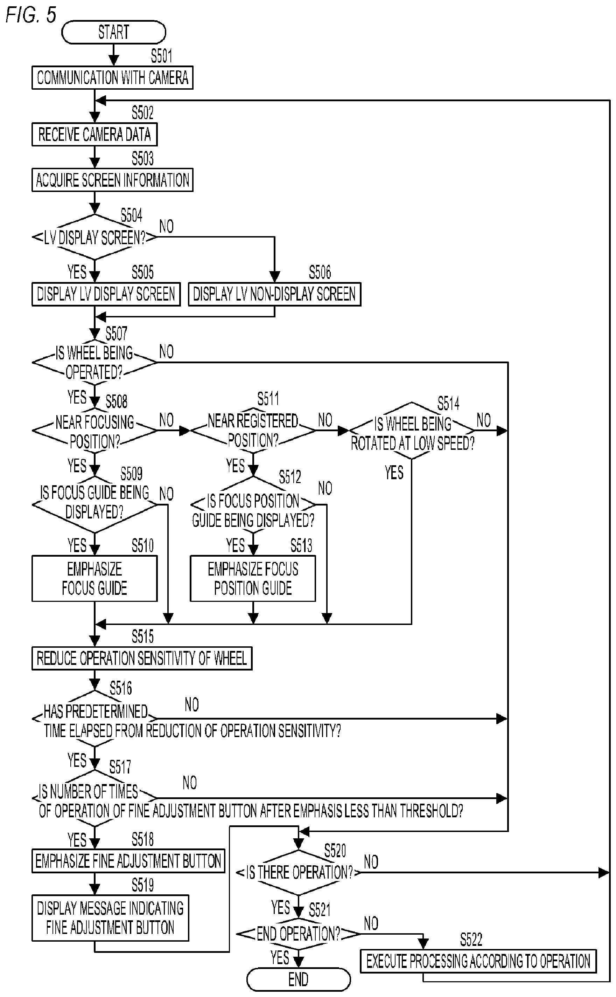

FIG. 5 is a flowchart illustrating an operation example of the smartphone 200. The operation of FIG. 5 is implemented by the control unit 201 loading the program recorded in the nonvolatile memory 203 (for example, the program of the camera control application) on the working memory 204 and executing the program. For example, when the start of the camera control application is instructed, the operation of FIG. 5 starts. Note that, in the following description, the camera 100 is a camera to be operated.

In S501, the control unit 201 executes communication with the camera 100 via the connection unit 211.

In S502, the control unit 201 receives data from the camera 100 via the connection unit 211. The data includes state, capability, setting value, LV image, and the like of the camera 100.

In S503, the control unit 201 acquires screen information indicating the type of the screen to be displayed on the display unit 206 from the working memory 204. When the smartphone 200 (camera control application) starts, the control unit 201 stores screen information indicating the LV display screen in the working memory 204. When the screen is changed according to a user operation, the control unit 201 updates the screen information stored in the working memory 204. The screen information indicates, for example, an LV display screen or an LV non-display screen.

In S504, the control unit 201 determines whether or not the screen to be displayed on the display unit 206 is the LV display screen (whether or not the screen information acquired in S503 indicates the LV display screen). When the screen is the LV display screen, the process proceeds to S505, and otherwise, the process proceeds to S506.

In S505, the control unit 201 displays the LV display screen on the display unit 206. For example, the LV display screen 301 illustrated in FIG. 3A is displayed.

In S506, the control unit 201 displays the LV non-display screen on the display unit 206. For example, the LV non-display screen 302 illustrated in FIG. 3B is displayed.

In S507, the control unit 201 determines whether or not the wheel 341 is being operated. When the wheel 341 is being operated, the process proceeds to S508, and otherwise, the process proceeds to S520.

In S508, the control unit 201 determines whether or not the focal position of the camera 100 is near the focusing position. When the focal position is near the focusing position, the process proceeds to S509, and otherwise, the process proceeds to S511. The determination as to whether or not the focal position of the camera 100 is near the focusing position is a determination as to whether or not the focal position is within a predetermined range including the focusing position. The predetermined range is, for example, a range of the focal depth or a range narrower than the range of the focal depth.

In S509, the control unit 201 determines whether or not the focus guide 322 is being displayed. When the focus guide 322 is being displayed, the process proceeds to S510, and otherwise, the process proceeds to S515. The case where the focus guide 322 is not being displayed includes a case where the display screen is an LV non-display screen, a case where the focus guide 322 is not displayed on the LV display screen, and the like.

In S510, the control unit 201 emphasizes the focus guide 322 as illustrated in FIG. 4A.

In S511, the control unit 201 determines whether or not the focal position of the camera 100 is near the registered position. When the focal position is near the registered position, the process proceeds to S512, and otherwise, the process proceeds to S514. The determination as to whether or not the focal position of the camera 100 is near the registered position is a determination as to whether or not the focal position is within a predetermined range including the registered position.

In S512, the control unit 201 determines whether or not the focus position guide 323 is being displayed. When the focus position guide 323 is being displayed, the process proceeds to S513, and otherwise, the process proceeds to S514. The case where the focus position guide 323 is not being displayed includes a case where the display screen is the LV non-display screen, a case where the focus position guide 323 is not displayed on the LV display screen, and the like.

In S513, the control unit 201 emphasizes the focus position guide 323 as illustrated in FIG. 4A.

In S514, the control unit 201 determines whether or not the wheel 341 is rotating at a low speed. When the wheel 341 is rotating at a low speed, the process proceeds to S515, and otherwise, the process proceeds to S520. The determination as to whether or not the wheel 341 is rotating at a low speed may be interpreted as a determination as to whether or not the focal position is moving at a low speed (a speed lower than the threshold) according to the operation of the wheel 341. The determination as to whether or not the wheel 341 is rotating at a low speed may be a determination as to whether or not an operation of rotating the wheel 341 at a low speed (an operation of moving the touch position at a low speed so as to rotate the wheel 341 at a low speed) continues for a predetermined time or more. For example, the control unit 201 records and manages the duration of the low-speed rotation of the wheel 341 in the working memory 204.

In S515, the control unit 201 lowers the operation sensitivity of the wheel 341 by reducing the movement amount of the focal position with respect to the rotation amount of the wheel 341. After the operation sensitivity of the wheel 341 is reduced, when the process proceeds to S515 again, the control unit 201 maintains a state in which the operation sensitivity of the wheel 341 is reduced. When the focal position is separated from both the focusing position and the registered position and the low-speed rotation of the wheel 341 is not performed, the control unit 201 increases (returns) the operation sensitivity of the wheel 341 to the original operation sensitivity.

In S516, the control unit 201 determines whether or not a predetermined time has elapsed after reducing the operation sensitivity of the wheel 341. When the predetermined time has elapsed, the process proceeds to S517, and otherwise, the process proceeds to S520. For example, when a state in which the focal position is near the focusing position continues for a predetermined time, the process proceeds to S517. For example, the control unit 201 records and manages an elapsed time from when the operation sensitivity of the wheel 341 is reduced in the working memory 204.

In S517, the control unit 201 determines whether or not the number of times of operation of the fine adjustment button 342 after emphasis of the fine adjustment button 342 is less than a threshold. When the number of times of operation of the fine adjustment button 342 is less than the threshold, the process proceeds to S518, and otherwise (when the number of times of operation reaches the threshold), the process proceeds to S520. For example, the control unit 201 records and manages the number of times of operation of the fine adjustment button 342 after emphasizing the fine adjustment button 342 in the working memory 204.

In S518, the control unit 201 emphasizes the fine adjustment button 342 as illustrated in FIG. 4A or 4B. As described above, in the present embodiment, the fine adjustment button 342 is emphasized by changing the size and color of the fine adjustment button 342. However, the method of emphasizing the fine adjustment button 342 is not limited thereto, and the fine adjustment button 342 may be emphasized by, for example, blinking or deformation of the fine adjustment button 342. Similarly, a method of emphasizing the focus guide 322 and the focus position guide 323 is not particularly limited.

In S519, as illustrated in FIG. 4A or 4B, the control unit 201 displays a message 401 which is an item indicating the fine adjustment button 342. Note that the item indicating the fine adjustment button 342 is not limited to the message 401, and may be, for example, an icon indicating the fine adjustment button 342.

In S520, the control unit 201 determines whether or not a user operation has been received. When the user operation has been received, the process proceeds to S521, and otherwise, the process proceeds to S522. The user operation is, for example, a touch operation on a touch panel provided in the display unit 206.

In S521, the control unit 201 determines whether or not the user operation received in S520 is an application end operation. When the user operation is the application end operation, the control unit 201 ends the operation of FIG. 5, and otherwise, the process proceeds to S522.

In S522, the control unit 201 executes processing according to the user operation received in S520. For example, the control unit 201 changes the display screen or changes a setting parameter of the camera 100.

As described above, in the present embodiment, the fine adjustment button 342 is emphasized in a scene where the user wants to finely adjust the focal position during the operation of the wheel 341. For example, the fine adjustment button 342 is emphasized when the focal position falls within a predetermined range including the focusing position or the registered position during the operation of the wheel 341 or when the wheel 341 is rotating at a low speed. In this way, it is easy for the user to notice the fine adjustment button 342 in a scene where the user wants to finely adjust the focal position during the operation of the wheel 341.

Further, in the present embodiment, the message 401 is displayed in a scene where the user wants to finely adjust the focal position during the operation of the wheel 341. In this way, it is easier for the user to notice the fine adjustment button 342 in a scene where the user wants to finely adjust the focal position during the operation of the wheel 341.

In the present embodiment, the focus guide 322 is also emphasized when the focal position falls within a predetermined range including the focusing position during the operation of the wheel 341. In this way, it is easy for the user to grasp that the focal position is near the focusing position. In addition, it is easier for the user to notice the fine adjustment button 342 in a scene where the user wants to finely adjust the focal position during the operation of the wheel 341 for adjusting the focal position to the focusing position.

Similarly, in the present embodiment, when the focal position falls within a predetermined range including the registered position during the operation of the wheel 341, the focus position guide 323 is also emphasized. In this way, it is easy for the user to grasp that the focal position is near the registered position. In addition, it is easier for the user to notice the fine adjustment button 342 in a scene where the user wants to finely adjust the focal position during the operation of the wheel 341 for adjusting the focal position to the registered position.

In the present embodiment, the focus guide 322 and the focus position guide 323, and the fine adjustment button 342 are emphasized in the same color. In this way, it is easy for the user to grasp that the emphasis of the focus guide 322 and the focus position guide 323, and the emphasis of the fine adjustment button 342 are associated with each other, and the above-described effect can be enhanced.

In the present embodiment, the fine adjustment button 342 and the message 401 are not emphasized until a predetermined time elapses after reducing the operation sensitivity of the wheel 341, and the fine adjustment button 342 and the message 401 are emphasized when the predetermined time elapses after reducing the operation sensitivity of the wheel 341. In this way, the fine adjustment button 342 and the message 401 can be emphasized only in a scene where the user finely adjusts the focal position by the wheel 341 (a scene where the user is very likely to finely adjust the focal position). As a result, unnecessary emphasis of the fine adjustment button 342 and the message 401 can be suppressed. By suppressing unnecessary emphasis of the fine adjustment button 342 and the message 401, it is also possible to suppress occurrence of user's discomfort due to the unnecessary emphasis.

Further, in the present embodiment, when the number of times of operation of the fine adjustment button 342 after the emphasis of the fine adjustment button 342 reaches a threshold, the emphasis of the fine adjustment button 342 and the message 401 is released. In this way, it is possible to suppress continuous emphasis of the fine adjustment button 342 and the message 401, and it is possible to suppress occurrence of user's discomfort due to the continuous emphasis of the fine adjustment button 342 and the message 401.

Note that the above-described various types of control may be processing that is carried out by one piece of hardware (e.g., processor or circuit), or otherwise. Processing may be shared among a plurality of pieces of hardware (e.g., a plurality of processors, a plurality of circuits, or a combination of one or more processors and one or more circuits), thereby carrying out the control of the entire device.

Also, the above processor is a processor in the broad sense, and includes general-purpose processors and dedicated processors. Examples of general-purpose processors include a central processing unit (CPU), a micro processing unit (MPU), a digital signal processor (DSP), and so forth. Examples of dedicated processors include a graphics processing unit (GPU), an application-specific integrated circuit (ASIC), a programmable logic device (PLD), and so forth. Examples of PLDs include a field-programmable gate array (FPGA), a complex programmable logic device (CPLD), and so forth.

The embodiment described above (including variation examples) is merely an example. Any configurations obtained by suitably modifying or changing some configurations of the embodiment within the scope of the subject matter of the present disclosure are also included in the present disclosure. The present disclosure also includes other configurations obtained by suitably combining various features of the embodiment.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An electronic device comprising:
a control means configured to perform control to display a first operation member capable of receiving a first operation of adjusting a focal position of an imaging means and a second operation member capable of receiving a second operation of finely adjusting the focal position, wherein
the control means performs control to emphasize the second operation member if the focal position falls within a predetermined range including a target position that is a focusing position or a registered position during reception of the first operation.

2. The electronic device according to claim 1, wherein
the first operation is an operation of touching the first operation member and moving a touch position, and
the control means performs control to move the focal position at a speed corresponding to a moving speed of the touch position in the first operation.

3. The electronic device according to claim 1 or 2, wherein
the second operation is an operation of touching the second operation member, and
the control means performs control to move the focal position at a predetermined speed for a predetermined time or by a predetermined amount in response to one touch on the second operation member.

4. The electronic device according to claim 3, wherein
the control means performs control to continuously move the focal position at the predetermined speed while the touch on the second operation member continues.

5. The electronic device according to any one of claims 1 to 4, wherein
the control means is capable of performing control to display an item indicating a positional relationship between the focal position and the target position, and
the control means performs control to emphasize the second operation member and the item if the focal position falls within the predetermined range during reception of the first operation.

6. The electronic device according to claim 5, wherein
the control means is capable of performing control to display a live view image obtained by the imaging means,
the control means performs control to display the item in a case where the live view image is displayed, and performs control to emphasize the second operation member and the item if the focal position falls within the predetermined range during reception of the first operation, and
the control means does not perform control to display the item in a case where the live view image is not displayed, and performs control to emphasize the second operation member if the focal position falls within the predetermined range during reception of the first operation.

7. The electronic device according to claim 5 or 6, wherein
the control means performs control to emphasize the second operation member and the item in a same color if the focal position falls within the predetermined range during reception of the first operation.

8. The electronic device according to any one of claims 1 to 7, wherein
the control means performs control to emphasize the second operation member regardless of whether or not the focal position is within the predetermined range while the focal position is being moved at a speed lower than a threshold according to the first operation.

9. The electronic device according to any one of claims 1 to 8, wherein
the control means performs control to emphasize the second operation member and display an item indicating the second operation member, if the focal position falls within the predetermined range during reception of the first operation.

10. The electronic device according to any one of claims 1 to 9, wherein
the control means performs control to continue emphasis of the second operation member until a number of times of the second operation after emphasis of the second operation member reaches a threshold.

11. The electronic device according to any one of claims 1 to 10, wherein
the control means performs control to reduce operation sensitivity of the first operation member if the focal position falls within the predetermined range during reception of the first operation.

12. The electronic device according to claim 11, wherein
the control means performs control not to emphasize the second operation member until a state in which the focal position falls within the predetermined range continues for a predetermined time after reducing the operation sensitivity of the first operation member during reception of the first operation, and to emphasize the second operation member if the state in which the focal position falls within the predetermined range continues for the predetermined time after reducing the operation sensitivity of the first operation member during reception of the first operation.

13. A control method of an electronic device, comprising:
a step of performing control to display a first operation member capable of receiving a first operation of adjusting a focal position of an imaging means and a second operation member capable of receiving a second operation of finely adjusting the focal position; and
a step of performing control to emphasize the second operation member if the focal position falls within a predetermined range including a target position that is a focusing position or a registered position during reception of the first operation.

14. A computer program comprising instructions which, when the program is executed by a computer, cause the computer to carry out function of each means of the electronic device according to any one of claims 1 to 12.

15. A computer readable medium storing a computer program comprising instructions which, when the program is executed by a computer, cause the computer to carry out function of each means of the electronic device according to any one of claims 1 to 12.
